# EUROPÄISCHE PATENTSCHRIFT

(11) **EP 0 573 437 B1**
(45) Veröffentlichungstag und Bekanntmachung des Hinweises auf die Patenterteilung: **30.11.1994**
(21) Anmeldenummer: 92903606.9
(22) Anmeldetag: 05.02.1992
(51) Int. Cl.: F02D 41/20

(54) **EINRICHTUNG ZUR ERFASSUNG DES EINSPRITZBEGINNZEITPUNKS BEI EINEM EINSPRITZVENTIL**
DEVICE FOR DETERMINING THE START OF INJECTION IN A FUEL-INJECTION VALVE
DISPOSITIF POUR LA SAISIE DU MOMENT DU DEBUT D'INJECTION DANS LE CAS D'UN INJECTEUR

(30) Priorität: 27.02.1991 EP 91102942
(43) Veröffentlichungstag der Anmeldung: 15.12.1993
(73) Patentinhaber: SIEMENS AKTIENGESELLSCHAFT, 80333 München (DE)
(72) Erfinder: MAYER-DICK, Anton, D-90766 Fürth (DE); WEIGL, Manfred, D-92348 Berg (DE)
(86) Internationale Anmeldenummer: EP9200254
(87) Internationale Veröffentlichungsnummer: WO9215779

(56) Entgegenhaltungen:
- EP-A- 0 438 640
- US-A- 4 612 597
- US-A- 4 736 267
- PATENT ABSTRACTS OF JAPAN, Vol.13, No.320(M-853)(3668) 20 July 1989, & JP-A-01105084 (MAZDA) 21 April 1989
- PATENT ABSTRACTS OF JAPAN, Vol.5, No. 25(M-55), 14 February 1981, &JP-A-55153833 (NIPPON CARBURETER)

## Beschreibung

Die Erfindung betrifft eine Einrichtung zur Erfassung des Einspritzbeginnzeitpunkts bei einem Einspritzventil für eine Brennkraftmaschine gemäß Oberbegriff von Anspruch 1.

Eine solche Einrichtung ist zum Beispiel aus der deutschen Patentschrift 28 05 175 bekannt. Dabei ist ein mechanisch-elektrischer Bewegungsgeber vorgesehen, der ein der Hubbewegung des Einspritzventils entsprechendes elektrisches Signal erzeugt. Dieses Signal wird differenziert einem Schwellwertschalter zugeführt, dessen Ansprechen den Spritzbeginn kennzeichnet.

Durch die Differentiation des Gebersignals kann dabei der Einspritzbeginnzeitpunkt schneller und genauer erkannt werden als bei Betrachtung des nicht differenzierten Gebersignals.

Die Einrichtung erfordert einen solchen Bewegungsgeber für jedes betrachtete Einspritzventil. Bedingt durch den Trend zu immer kleiner werdenden Einspritzventilen wird es aber zunehmend schwieriger und teurer solche Geber vorzusehen.

Aus der JP-A-01 105 084 ist eine Einrichtung zum Überprüfen eines Magnetventils für die Einspritzanlage einer Brennkraftmaschine bekannt. Um eine fehlerhafte Funktion dieses Ventils zu erkennen, werden Änderungen im Kurvenverlauf des Ansteuerstromes herangezogen und zur leichteren Auswertung dieses Signal differenziert.

Der Erfindung liegt demgegenüber die Aufgabe zugrunde eine solche Einrichtung zu vereinfachen und trotzdem den Einspritzbeginnzeitpunkt sehr genau zu erfassen.

Die erfindungsgemäße Lösung ist im Anspruch 1 gekennzeichnet. Vorteilhafte Weiterbildungen der Erfindung finden sich in den Unteransprüchen. Gemäß der Erfindung wird kein spezieller Bewegungsgeber verwendet, sondern der Einspritzbeginnzeitpunkt also die Bewegung des Ventils, wird aus dem Ansteuersignal für das Einspritzventil selbst erkannt.

Im Ruhezustand stellt ein Einspritzventil in erster Näherung eine Reihenschaltung aus einer Induktivität und einem Ohmschen Widerstand dar. Nach dem Einschalten steigt daher der Strom gleichförmig an und wird danach nur durch den Ohmschen Widerstand begrenzt. Bewegt sich schließlich das Ventil aus der Ruhelage (Bewegungsbeginn) ergibt sich eine Induktivitätsänderung und damit eine Änderung des Stromanstiegs (Änderung der 1. Ableitung des Ansteuerstromes dJ/dt). Eine weitere deutliche Änderung der Induktivität ergibt sich bei Erreichen der Endstellung (Bewegungsende).

Erfindungsgemäß werden diese Zeitpunkte erkannt, indem der durch das Einspritzventil fließende Strom zweimal differenziert wird. Diese zweite Ableitung des Stroms gibt nur dann einen positiven Wert, wenn die Steigung des Stroms - also die erste Ableitung - zunimmt.

Dies ist zum erstenmal der Fall zum Ansteuerzeitpunkt und dann beim Auftreten der zuvor genannten Induktivitätsänderungen beim Bewegungsbeginn und Bewegungsende. Bei niederohmigen Ventilen ergibt sich beim Bewegungsbeginn eine größere zweite Ableitung und bei höherohmigen Ventilen beim Bewegungsende. Daher empfiehlt es sich bei niederohmigen Ventilen den Bewegungsbeginn und bei höherohmigen Ventilen das Bewegungsende als Einspritzbeginnzeitpunkt zu detektieren. Diese Auswahl erfolgt durch die Wahl der Höhe eines Schwellwerts einer Schwellwertstufe, der das der zweiten Ableitung entsprechende Signal zugeführt wird. Auch Störeinflüsse und Nichtlinearitäten kommen durch diese Schwellwertstufe nicht zur Wirkung. Dementsprechend ist dann immer der Zeitpunkt nach dem Ansteuerzeitpunkt, an dem die Schwellwertstufe zum zweitenmal anspricht gleichbedeutend mit dem Einspritzbeginnzeitpunkt.

Durch die direkte Betrachtung des Stroms durch das Einspritzventil spielen Ventiltoleranzen keine Rolle. Die Einrichtung ist gleichermaßen gut für jede Art von Einspritzventil anzuwenden. Auch der Einfluß durch schwankende VersorgungsSpannungen spielt keine Rolle, da bei der Auswertung die Änderung der Anstiegsgeschwindigkeit betrachtet wird.

Ein weiterer Vorteil ist die Diagnosemöglichkeit durch Betrachtung des Zeitraums zwischen der Ventilansteuerung und der Ventilbewegung. Verlängert sich z.B. dieser Zeitraum über ein bestimmtes Maß, so haben sich entweder die Ventileigenschaften verändert oder die Versorgungsspannung liegt außerhalb der vorgegebenen Toleranz. Kurzschlüsse bzw. Unterbrechungen können ebenso erkannt werden.

Die Erfindung wird anhand der Figuren näher erläutert. Dabei zeigen:
- Figur 1: ein vereinfachtes Blockschaltbild der Ansteuerung eines Einspritzventils sowie eine Einrichtung zur Erfassung des Einspritzbeginnzeitpunkts und
- Figur 2: den Stromverlauf an verschiedenen Punkten des Blockschaltbilds aus Figur 1.

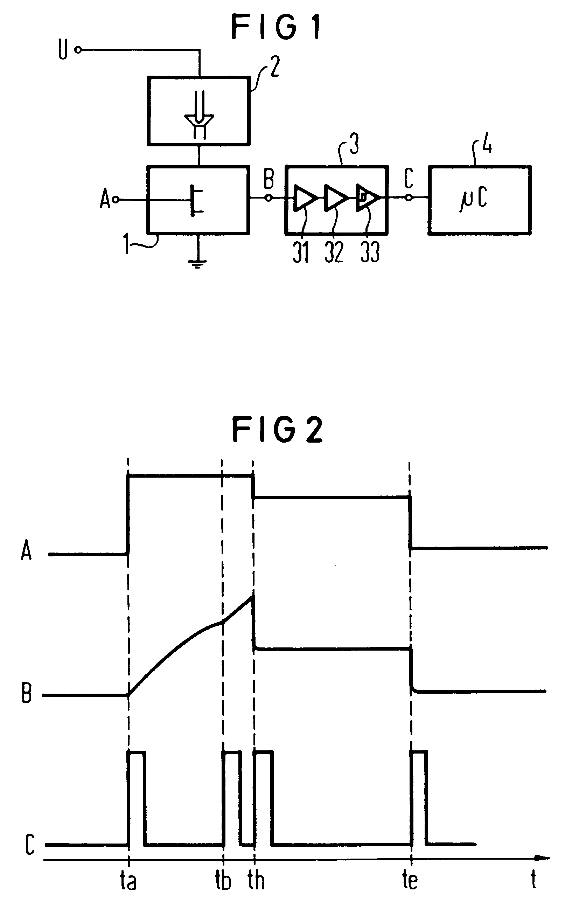

Beim Blockschaltbild der Figur 1 wird ein Einspritzventil 2 über einen Schalter 1 an eine Spannung U geschaltet. Das Einspritzventil 2 dient zur Kraftstoffeinspritzung in eine Brennkraftmaschine. Es kann dabei für eine Singlepoint-Einspritzung nur ein solches Einspritzventil 2 vorgesehen sein oder bei Multipoint-Einspritzungen entsprechend jeweils ein Einspritzventil 2 pro Zylinder. Im folgenden Ausführungsbeispiel wird von einem Einspritzventil 2 ausgegangen, wobei im Falle mehrerer Einspritzventile das gesagte jeweils analog für die anderen gilt. Der in Figur 2 dargestellte Stromverlauf ist typisch für niederohmige Ventile (Ri < 2 Ω).

Beim Schließen des Schalters 1 wird durch den einsetzenden Stromfluß das Einspritzventil 2 geöffnet. Der Schalter 1 ist ein beliebiger geeigneter Schalter, insbesondere ein Halbleiterschalter wie ein MOSFET. Die Ansteuerung des Schalters 1 erfolgt von einer nicht dargestellten Motorsteuerung aus, die den Schalter über einen Meßpunkt A ansteuert.

Dieses Signal im Meßpunkt A ist in Figur 2 über der Zeit t gezeigt. Zu einem Ansteuerzeitpunkt ta wird der Schalter 1 geschlossen. Dadurch steigt der Strom durch das Einspritzventil 2 von 0 beginnend mit konstanter Steigung an. Dieser Stromverlauf ist für einen Meßpunkt B aus Figur 1 in Figur 2 eingezeichnet. Die eigentliche Bewegung des Ventils beginnt erst, wenn der Strom soweit angestiegen ist, daß die durch ihn erzeugte Kraft größer wird als die Gegenkräfte (Federvorspannung, Kraftstoffdruck etc., Reibung des Einspritzventils 2). Dieser Zeitpunkt der beginnenden Bewegung des Einspritzventils 2 ist in Figur 2 ein Einspritzbeginnzeitpunkt tb, da erst dann der Kraftstoff das Einspritzventil 2 passieren kann. Nach dem Öffnen des Einspritzventils 2 wird der Strom zu einem Umschaltzeitpunkt th auf einen Haltestrom begrenzt, um die Verlustleistung d.h. die thermische Belastung zu reduzieren (das Ventil braucht nur noch in der Endlage gehalten zu werden). Zu einem Abschaltzeitpunkt te schließlich wird der Schalter 1 wieder geöffnet und damit der Stromfluß unterbrochen. Das Einspritzventil 2 kehrt dann durch Federkraft in seine geschlossene Ruhelage zurück.

Die erfindungsgemäße Einrichtung zum Erfassen des Einspritzbeginnzeitpunkts tb macht sich den bereits beschriebenen Effekt zunutze, daß sich die Steigung des Stroms durch das Einspritzventil 2 zum Einspritzbeginnzeitpunkt tb ändert. Dazu wird der Strom durch das Einspritzventil 2 über den Meßpunkt B einer Aufbereitungsschaltung 3 zugeführt. Die Aufbereitungsschaltung 3 enthält hintereinander geschaltet zwei Differenzierstufen 31, 32 und eine Schwellwertstufe 33. Die Differenzierstufen 31, 32 sind entsprechend beschaltete Operationsverstärker und die Schwellwertstufe 33 ist ein Schmitt-Trigger. Das Ausgangssignal an einem Meßpunkt C aus Figur 1 entspricht daher dem zweimal differenzierten Strom durch das Einspritzventil 2. Durch die Schwellwertstufe kommen dabei minimale Steigungsänderungen vor dem Einspritzbeginnzeitpunkt tb oder Störeinflüsse nicht zur Wirkung, solange der eingestellte Schwellwert nicht erreicht wird. Die Höhe dieses Schwellwerts ist anwendungspezifisch.

Da die zweite Ableitung der Änderung der ersten Ableitung, also der Änderung der Steigung des Stromverlaufs, entspricht, ergibt sich wie in Figur 2 ersichtlich im Meßpunkt C das erste Mal zum Ansteuerzeitpunkt ta ein impulsförmiges Schwellsignal.

Die nächste Steigungsänderung und damit das nächste Schwellsignal tritt zum Einspritzbeginnzeitpunkt tb auf. Weitere Schwellsignale folgen zum Umschaltzeitpunkt th und zum Abschaltzeitpunkt te.

Wie in Figur 1 ersichtlich werden die Schwellsignale einer Logikeinrichtung 4 zugeführt. Die Logikeinrichtung 4 ist ein Microcomputer mit entsprechender Eingangsbeschaltung. Sie erkennt den Einspritzbeginnzeitpunkt tb mit Eintreffen des zweiten Schwellsignals nach dem Ansteuerzeitpunkt ta. Ein Signal für den Ansteuerzeitpunkt ta wird der Logikeinrichtung 4 dabei über den Meßpunkt A oder direkt von der den Schalter 1 ansteuernden Motorsteuerung zugeleitet. Gemäß einer bevorzugten Ausführungsform sind die Funktionen der Logikeinrichtung 4 in der bereits vorhandenen Motorsteuerung integriert, wobei dann eine solche Signalübermittlung entfällt.

Die erfindungsgemäße Einrichtung ermöglicht weiterhin einen schonenden und stromsparenden Betrieb des Einspritzventils 2. Einerseits soll der Asteuerstrom bei Einspritzventilen bekanntlich möglist groß sein, um eine schnelle Öffnung zu gewährleisten. Andererseits ist damit ein starkes Anschlagprellen verbunden und durch eine späte Umschaltung vom Ansteuerstrom auf einen niedrigeren Haltestrom ergibt sich ein erhöhter Strombedarf.

Über das genaue Erkennen des Einspritzbeginnzeitpunkts kann nun ein günstiger Kompromiß zwischen Ansteuerstrom und Haltestrom gefunden werden. So wird der Ansteuerstrom nach dem Erkennen des Einspritzbeginnzeitpunkts noch um einen bestimmten Faktor der Zeit zwischen der Ventilansteuerung und der Ventilbewegung verlängert und dann auf Haltestrom umgeschaltet. Der Faktor wird durch Versuche ermittelt, wobei sich Werte von 1/4 - 1/2 als besonders günstig erwiesen haben. Der maximale Ansteuerstrom wird auf ungefähr 4 Ampere begrenzt, so daß bei eventuellen Fehlern im Zusammenhang mit der Umschaltung eine Überlastung des Einspritzventils 2 vermieden wird.

Die Logikeinrichtung 4 führt außerdem eine Diagnosefunktion durch. Dabei wird einerseits geprüft, ob pro Ansteuerzyklus, also vom Ansteuerzeitpunkt ta bis zum Abschaltzeitpunkt te jeweils die entsprechenden Schwellsignale auftreten. Andererseits wird der Zeitraum zwischen dem Ansteuerzeitpunkt ta und dem Einspritzbeginnzeitpunkt tb betrachtet. Dafür wird für diesen Zeitraum ein Referenzwert abgespeichert, der bei einem funktionsfähigen Einspritzventil 2 und ordnungsgemäßer Spannung U nicht überschritten werden darf. Durch Vergleich des aktuell ermittelten Zeitraums mit diesem Referenzwert kann ein mangelhaftes Einspritzventil 2 und/oder eine unzulässige Spannung U erkannt werden.

## Patentansprüche

1. Einrichtung zur Erfassung des Einspritzbeginnzeitpunkts bei einem Einspritzventil für eine Brennkraftmaschine, mit einer Differenziereinrichtung (31,32), der der Strom durch das Einspritzventil (2) zugeführt ist und die ein Ausgangssignal abgibt,
**dadurch gekennzeichnet,**
daß das Ausgangssignal der zweiten Ableitung des zeitlichen Stromverlaufs entspricht, daß eine Schwellwertstufe (33) das Ausgangssignal erhält, die ein Schwellsignal erzeugt, wenn das Ausgangssignal einen Schwellwert übersteigt und daß die Einrichtung eine Logikeinrichtung (4) umfaßt, die den Einspritzbeginnzeitpunkt (tb) erkennt, wenn nach einem Ansteuerzeitpunkt (ta) des Einspritzventils (2) das Schwellsignal zum zweiten Mal auftritt.

2. Einrichtung nach Anspruch 1,
**dadurch gekennzeichnet,**
daß die Differenziereinrichtung (31,32) zwei hintereinander geschaltete als Differenzierer beschaltete Operationsverstärker aufweist.

3. Einrichtung nach Anspruch 1,
**dadurch gekennzeichnet,**
daß die Schwellwertstufe (33) ein Schmitt-Trigger ist.

4. Einrichtung nach Anspruch 1,
**dadurch gekennzeichnet,**
daß die Einrichtung nach Erkennung des Einspritzbeginnzeitpunkts (tb) den dabei fließenden erhöhten Ansteuerstrom um einen bestimmten Faktor der Zeit zwischen dem Ansteuerzeitpunkt (ta) und dem Einspritzbeginnzeitpunkt (tb) verlängert und den Strom dann auf einen gegenüber dem Ansteuerstrom niedrigeren Haltestrom zurücknimmt.

5. Einrichtung nach Anspruch 4,
**dadurch gekennzeichnet,**
daß der Faktor 1/4 - 1/2 ist.

6. Einrichtung nach Anspruch 4,
**dadurch gekennzeichnet,**
daß die Einrichtung den maximalen Ansteuerstrom auf einen wählbaren Wert begrenzt.

## Claims

1. Device for recording the instant at which injection starts in an injection valve for an internal combustion engine, having a differentiating device (31,32), to which the current through the injection valve (2) is supplied and which emits an output signal, characterized in that the output signal corresponds to the second derivative of the variation in current with respect to time, in that a threshold value stage (33) receives the output signal, which threshold value stage generates a threshold signal whenever the output signal exceeds a threshold value and in that the device includes a logic device (4) which recognizes the instant (tb) at which injection starts when, after a triggering instant (ta) of the injection valve (2), the threshold signal occurs for the second time.

2. Device according to Claim 1, characterized in that the differentiating device (31,32) has two operational amplifiers connected as differentiators and connected in series.

3. Device according to Claim 1, characterized in that the threshold value stage (33) is a Schmitt trigger.

4. Device according to Claim 1, characterized in that after recognition of the instant (tb) at which injection starts, the device extends the increased triggering current then flowing by a certain factor of the time between the triggering instant (ta) and the instant (tb) at which injection starts and then reduces the current to a holding current which is lower relative to the triggering current.

5. Device according to Claim 4, characterized in that the factor is between 1/4 and 1/2.

6. Device according to Claim 4, characterized in that the device limits the maximum triggering current to a value which can be chosen.

## Revendications

1. Dispositif pour détecter l'instant du début d'injection dans une soupape d'injection pour un moteur à combustion interne, comportant un dispositif différentiateur (31, 32), auquel est envoyé le Courant traversant la soupape d'injection (2) et qui délivre un signal de sortie, caractérisé par le fait que le signal de sortie correspond à la dérivée seconde de la variation du courant dans le temps, que le signal de sortie est reçu par un étage à valeur de seuil (33) qui produit un signal de seuil lorsque le signal de sortie dépasse une valeur de seuil, et
que le dispositif comporte un dispositif logique (4), qui identifie l'instant (tb) de début de l'injection, lorsqu'après un instant de commande (ta) de la soupape d'injection (2), le signal de seuil apparaît pour la seconde fois.

2. Dispositif suivant la revendication 1, caractérisé par le fait que le dispositif différentiateur (31, 32) comporte deux amplificateurs opérationnels branchés en série et raccordés en tant que dispositif différentiateur.

3. Dispositif suivant la revendication 1, caractérisé par le fait que l'étage à valeur de seuil (33) est un déclencheur de Schmitt.

4. Dispositif suivant la revendication 1, caractérisé par le fait qu'après l'identification de l'instant (tb) du début de l'injection, le dispositif prolonge la circulation du courant de commande accru d'un facteur prédéterminé, pendant un intervalle de temps s'écoulant entre l'instant de commande (ta) et l'instant (tb) du début de l'injection, puis réduit le courant à un courant de maintien inférieur au courant de commande.

5. Dispositif suivant la revendication 4, caractérisé par le fait que le facteur est 1/4 - 1/2.

6. Dispositif suivant la revendication 4, caractérisé par le fait que le dispositif limite le courant maximum de commande à une valeur admissible.
